# EUROPÄISCHE PATENTSCHRIFT

(11) **EP 0 467 198 B1**
(45) Veröffentlichungstag und Bekanntmachung des Hinweises auf die Patenterteilung: **25.05.1994**
(21) Anmeldenummer: 91111393.4
(22) Anmeldetag: 09.07.1991
(51) Int. Cl.: B26F 3/00

(54) **Verfahren und Vorrichtung zum Bruchtrennen eines Bauteiles, insbesondere aus Metall**
Method and apparatus for fracture, separation of construction members, especially of metal
Procédé et appareil pour casser des éléments de construction, en particulier en métal

(30) Priorität: 18.07.1990 DE 4022860
(43) Veröffentlichungstag der Anmeldung: 22.01.1992
(73) Patentinhaber: Bayerische Motoren Werke Aktiengesellschaft, 80788 München (DE)
(72) Erfinder: Wiesemann, Johann, W-8000 München 50 (DE); Laupp, Helmut, W-8000 München 2 (DE); Naucke, Linhardt, W-8000 München 60 (DE)

(56) Entgegenhaltungen:
- EP-A- 0 304 162
- DE-U- 8 905 863
- US-A- 4 754 906

## Beschreibung

Die Erfindung bezieht sich auf ein Verfahren zum Bruchtrennen eines Bauteiles gemäß den Merkmalen im Oberbegriff des Patentanspruches 1 sowie auf eine im Anspruch 3 beschriebene Vorrichtung zur Durchführung des Verfahrens.

Bekanntlich bieten durch einen einwandfreien Zugbruch getrennte Abschnitte eines Bauteiles bei nachfolgendem Zusammenfügen unter Vorspannung über die relativ rauhen Bruchtrennflächen eine wirksame gegenseitige Lagesicherung ohne zusätzliche Maßnahmen. Angewandt wird das Bruchtrenn-Verfahren vor allem bei metallenen Bauteilen, vorzugsweise beim Bruchtrennen eines Lagerdeckels vom übrigen Lagerring eines Pleuels für Hubkolbenmaschinen.

So sind beispielsweise aus der US-A-4,754,906 ein Verfahren und eine Vorrichtung zum Pleuel-Brechen bekannt, bei der die im Oberbegriff des Patentanspruches 1 bzw. 3 beschriebenen Merkmale gegeben sind. Hierbei wird die Kraft zum Brechen des Pleuels im großen Lagerring hydraulisch erzeugt und zur Einwirkung auf die vorrichtungsbewegliche Bauteil-Halterung über ein hydraulisches Gestänge fortgeleitet. Dabei auftretende Elastizitäten wirken sich ungünstig für einen steilen Anstieg des Kraftverlaufes aus, wodurch eine der Voraussetzungen für qualitativ hochwertige Bruchtrennflächen nur teilweise gegeben ist. Kritisch bei dieser Vorrichtung sind ferner die zu geringen Führungsflächen der vorrichtungsbeweglichen Bauteil-Halterung, da mit zunehmendem Verschleiß dieser Flächen zumindest beim Anschlagen der als Halbdorn gestalteten Bauteil-Halterung in der Lagerbohrung des Pleuels eine Schiefstellung nicht auszuschließen ist. Mit einer Schiefstellung wird der Bruchverlauf ebenfalls ungünstig beeinflußt.

Eine weitere Vorrichtung zum Pleuel-Brechen zeigt und beschreibt das DE-U-89 05 863 mit einem Verfahren, bei dem der Bruchvorgang über eine zweigeteilte, relativ große bewegte Masse bewerkstelligt ist. Diese Masse ist gebildet aus einer geführt fallenden Schlagmasse und einer als schwerer geführter Schlitten gestalteten gestoßenen Masse. Der die vorrichtungsbewegliche Bauteil-Halterung tragende Schlitten wird hierbei über das zu brechende Pleuel an die vorrichtungsstarre Bauteil-Halterung gehängt. Nachteilig bei diesem Verfahren ist, daß die Schlagmasse beim Auftreffen auf die gestoßene Masse des Schlittens aufgrund der Materialelastizitäten zurückfedert und somit beide Massen während des Bruchvorganges nicht konstant gleichgerichtet wirken. Eine Folge davon ist, daß die Bruchflächen entstandener Anrisse schwingend aufeinanderschlagen und Materialausbrechungen verursachen.

Der Erfindung liegt die Aufgabe zugrunde, ein Verfahren zum Bruchtrennen eines Bauteiles derart zu verbessern, daß die aus einem Energiespeicher freisetzbare Kraft zum Bauteil-Brechen im wesentlichen ohne Verluste durch Elastizitäten in der Übertragung sowie durch Spielausgleich von Führungstoleranzen und Verschleiß verzögerungsfrei am zu trennenden Bauteil zur Wirkung kommt.

Diese Aufgabe wird mit den Merkmalen des Patentanspruches 1 bzw. 3 gelöst. Der Grundgedanke der Erfindung ist, zwischen einem krafteinleitenden Organ des Energiespeichers und der mit einer relativ großen Masse festverbundenen, vorrichtungsbeweglichen Bauteil-Halterung ein steifes mechanisches Gestänge anzuordnen, das vor dem Auslösen der Zugbruch-Kraft zwischen beiden Einrichtungen verspannt wird. Mit dem Verfahren der gegenseitigen Verspannung von kraftabgebender Einrichtung und kraftaufnehmender Einrichtung werden vorrichtungs- und bauteilbedingte Leerwege sowie materialgegebene Elastizitäten ausgeschaltet.

Der Vorteil der Erfindung ist, daß die freisetzbare Zugbruch-Kraft verlustfrei am zu brechenden Bauteil zur Wirkung kommt. Ferner wirkt die Zugbruch-Kraft in vorteilhafter Weise im wesentlichen verzögerungsfrei, wobei die mit der kraftaufnehmenden Einrichtung, d. h. die mit der vorrichtungsbeweglichen Bauteil-Halterung festverbundene, vorzugsweise relativ groß gewählte Masse in Richtung der eingeleiteten Kraft während des Bruchvorganges kontinuierlich wirkt. Weiter kann mit der Wahl einer entsprechend großen Masse über die damit gegebene Trägheit ein steiler Anstieg des Kräfteverlaufes bis zum Freisetzen der Zugbruch-Kraft erreicht werden, wodurch in vorteilhafter Weise in den durch Kerben und/oder Haarrissen vorbestimmten Bruchquerschnitten des Bauteiles die Bruch-Kraft schlagartig zur Entfaltung kommt. Zusätzlich kann durch entsprechende Wahl eines Energiespeichers in Verbindung mit einer entsprechend groß gewählten Masse der vorrichtungsbeweglichen Bauteil-Halterung nach Anspruch 2 die aus dem Energiespeicher freisetzbare Kraft nach Erreichen eines vorbestimmten Maximalwertes über eine vorbestimmte Zeit im wesentlichen konstant gehalten werden. Mit dem Fortwirken der Zugbruch-Kraft nach dem schlagartigen Einsatz auf dem dabei erreichten Niveau werden in vorteilhafter Weise den Bruchvorgang störend beeinflussende, weitere Eigenbewegungen von Vorrichtungsteilen unterbunden, wobei erste Eigenbewegungen mittels des auf Anschlag verspannten mechanischen Gestänges vermieden sind.

Insgesamt ist mit den Verfahrensschritten nach den Ansprüchen 1 und 2 eine wesentliche Vorraussetzung dafür erreicht, daß beim Bruchtrennen eines Bauteiles der abzutrennende Teil am Ende des Bruchvorganges über alle Bruchquerschnitte gleichzeitig abgetrennt wird. Das gleichzeitige Trennen bzw. Brechen über mehrere Querschnitte unter Vermeiden eines Biegebruches in einem zuletzt brechenden Querschnitt ist zwar an sich aus der US-A-1,630,759 bekannt, ist dort jedoch für eine in einer Großserienfertigung nicht wirtschaftlich einsetzbare Vorrichtung beschrieben.

Eine vorteilhafte Vorrichtung zum Brechen von Bauteilen nach dem erfindungsgemäßen Verfahren in Großserienstückzahlen, insbesondere von Pleueln, ist im Anspruch 3 beschrieben. Anspruch 4 beschreibt als bevorzugten Energiespeicher eine Kolben-Zylinder-Einheit mit pneumatisch bewirkter hydraulischer Übersetzung, wobei der Hydraulik- bzw. Kraft-Kolben über eine Kolbenstange als Teil des mechanischen Gestänges verfügt, und wobei das Gestänge über einen an der Kolbenstange angeordneten, pneumatisch beaufschlagbaren Kolben mit Vorspannung angeordnet werden kann. Diese kombinierte Kolben-Zylinder-Einheit steht als Kaufteil zur Verfügung.

Der Anspruch 5 beschreibt den weiteren Teil des mechanischen Gestänges als einen mit der Kolbenstange verbundenen biegestarren Steg, an dem zur Einwirkung auf einen im wesentlichen die relativ große Zusatzmasse bildenden, die vorrichtungsbewegliche Bauteil-Halterung tragenden Schlitten in der Vorrichtung geführte Druckstäbe zur zentralen bzw. symmetrischen Krafteinleitung angeordnet sind. Die bauliche Kombination der Druckstäbe über den Steg mit der Kolbenstange am Hydraulik- bzw. Kraft-Kolben ergibt einen drucksteifen Verband mit dem wesentlichen Vorteil, daß am Ende des beispielsweise über einen Schnellhub erfolgten Vorspann-Vorganges des Gestänges der unmittelbar auf das Gestänge einwirkende Kraft-Kolben ohne zusätzliche Maßnahmen für die schlagartig einsetzende Kraft-Einleitung in Ausgangsposition gebracht ist. Damit läßt sich mit Abschluß des Vorspann-Vorganges ohne zeitliche Verzögerung die hydraulisch bewirkte Kraft zum Bruchtrennen aus dem Energiespeicher freisetzen, womit evtl. Rückfederungen aus Materialelastizitäten des Vorspann-Vorganges vorteilhaft entgegengewirkt wird.

In weiterer Ausgestaltung der Vorrichtung beschreiben die Ansprüche 6 und 7 Bauteil-Halterungen für solche Bauteile, bei denen die Bruchquerschnitte von einer Durchbrechung im Bauteil ausgehen und die Bauteil-Halterungen zum Bruchtrennen in die Durchbrechungen formschlüssig eingreifen. Ein Problem hierbei ist, daß die Querschnitte der beim Bruchtrennen des Bauteiles in der Durchbrechung auf Biegung beanspruchten Bauteil-Halterungen im Verhältnis zur wirkenden Bruchkraft nicht immer derart groß gewählt werden können, daß eine zwar minimale, den Bruchvorgang jedoch im Hinblick auf die Bruchflächenqualität ungünstig beeinflussende elastische Nachgiebigkeit sicher vermieden wird. Zur Beseitigung dieses Nachteiles werden die vorrichtungsstarre Bauteil-Halterung und die vorrichtungsbewegliche Bauteil-Halterung nach Anspruch 6 zumindest bei Beginn der Bruchtrennung des Bauteiles gegeneinander abgestützt. Eine bevorzugte Ausgestaltung der gegenseitigen Abstützung sieht in Anspruch 7 einen zwischen den Bauteil-Halterungen angeordneten Keil vor, der an diesen über korrespondierende Teilflächen anliegt und über eine Verstelleinrichtung mit Vorspannung gehalten und während des Bruchvorganges nachgeführt wird. Der Vorteil des mit mäßiger Vorspannung zwischen den Bauteil-Halterungen angeordneten Stütz-Keiles ist eine deutliche Reduzierung der Biegeelastizität, so daß das Bauteil über große Bereiche seiner Durchbrechung satt auf dem biegesteifen Bauteil-Halterungen aufliegt. Ein weiterer wesentlicher Vorteil der erfindungsgemäßen gegenseitigen Stützung ist die Eignung für eine automatisch arbeitende Vorrichtung. Hierfür scheint die in dem bereits weiter vorne genannten DE-U-89 05 863 aufgezeigte Abstützung der Bauteil-Halterungen kaum geeignet. Auch gibt die Pleuel-Brechvorrichtung mit einem Sprengkeil zwischen zwei translatorisch beweglich angeordneten Bauteil-Halterungen gemäß der US-A-4,860,419 bzw. der gleichlautenden EP-A-0 304 162 keine Anregung hierfür her, da der erfindungsgemäße Stütz-Keil mit einer vorrichtungsstarren und einer vorrichtungsbeweglichen Bauteil-Halterung zusammenwirkt. Weiter ist dieser Stütz-Keil während des Bruchvorganges mit der vorrichtungsbeweglichen Bauteil-Halterung gleichgerichtet verlagerbar zur Aufrechterhaltung der gegenseitigen Abstützung während des gesamten Bruchvorganges.

Die vorbeschriebene gegenseitige Abstützung der Bauteil-Halterungen ist nicht nur im Hinblick auf die Erzielung einer extrem starren Bauteil-Aufnahme zu sehen, sie wirkt sich ferner vorteilhaft aus auf die in den Ansprüchen 8 und 9 beschriebene Maßnahme der umfänglichen Einspannung des die Bauteil-Halterungen umschließenden Bereiches des Bauteiles vor dem Bruchtrennen. Durch die an der Außenkontur des Bauteil-Bereiches über jeweils eine Rücklaufsperre mit Vorspannung anliegenden Spannbacken sind während des Bruchvorganges auftretende, das Bruchverhalten und damit auch die Qualität der Bruchflächen ungünstig beeinflussende Formänderungen vorteilhaft unterbunden. Je starrer hierbei die Bauteil-Halterungen über die gegenseitige Abstützung sind, um so wirkungsvoller ist die umfängliche Einspannung des Bauteil-Bereiches gegen elastische Formänderungen bzw. gegen Schwingen des Bauteil-Bereiches. Mit der vorbeschriebenen umfänglichen Einspannung des die Bauteil-Halterungen umschließenden Bauteil-Bereiches ist neben den über den Stütz-Keil biegesteifen Bauteil-Halterungen sowie einer verlust- und verzögerungsfrei über ein vorgespanntes mechanisches Gestänge wirksamen Bruch-Kraft mit Nachsetzmöglichkeit auf hohem Niveau eine weitere Maßnahme zum vorteilhaft gleichzeitigen Bruchtrennen mehrerer Querschnitte in dem Bauteil-Bereich aufgezeigt.

Demgegenüber wird bei der zum Bruchtrennen eines Pleuels im großen Lagerring dienenden Vorrichtung gemäß der bereits genannten US-A-4,860,419 bzw. der EP-A-0 304 162 davon ausgegangen, daß mehrere Trennquerschnitte nacheinander brechen (mehrstufiges Brechen). Um einen damit gegebenen nachteiligen Biegebruch durch Drehung des zu trennenden Teiles im zuletzt brechenden Trennquerschnitt zu vermeiden, sind mit lediglich diametralen Bereichen der Außenkontur des Pleuel-Lagerringes form- und reibschlüssig zusammenwirkende Spannbacken vorgesehen, welche an gegen Federkraft verschiebebewegliche Schlitten jeweils starr angeordnet sind. Mit diesen Spannbacken ist zwar eine Drehsicherung der Abschnitte des mehrstufig brechenden Bauteiles gegen Ende des Bruchvorganges möglich, nicht jedoch die erfindungsgemäße umfängliche Einspannung des eine Bauteil-Halterung umschließenden Bereiches eines Bauteiles zur Unterbindung von elastischen Formänderungen während des gesamten Bruchvorganges. Diese erfindungsgemäße Einspannung ist somit weder durch die vorgenannten Schriften US-4,860,419 und der EP-A-0 304 162 noch durch die weiter vorne genannte US-A-1,630,759 nahegelegt.

Abschließend ist im Anspruch 11 für ein bevorzugtes Bauteil, nämlich ein Sinterschmiede-Pleuel, der Verfahrensablauf für ein einstufiges Bruchtrennen mit der in den Ansprüchen 3 bis 10 beschriebenen Vorrichtung angegeben.

Das erfindungsgemäße Verfahren ist anhand einer in der Zeichnung dargestellten, bevorzugten Vorrichtung veranschaulicht.

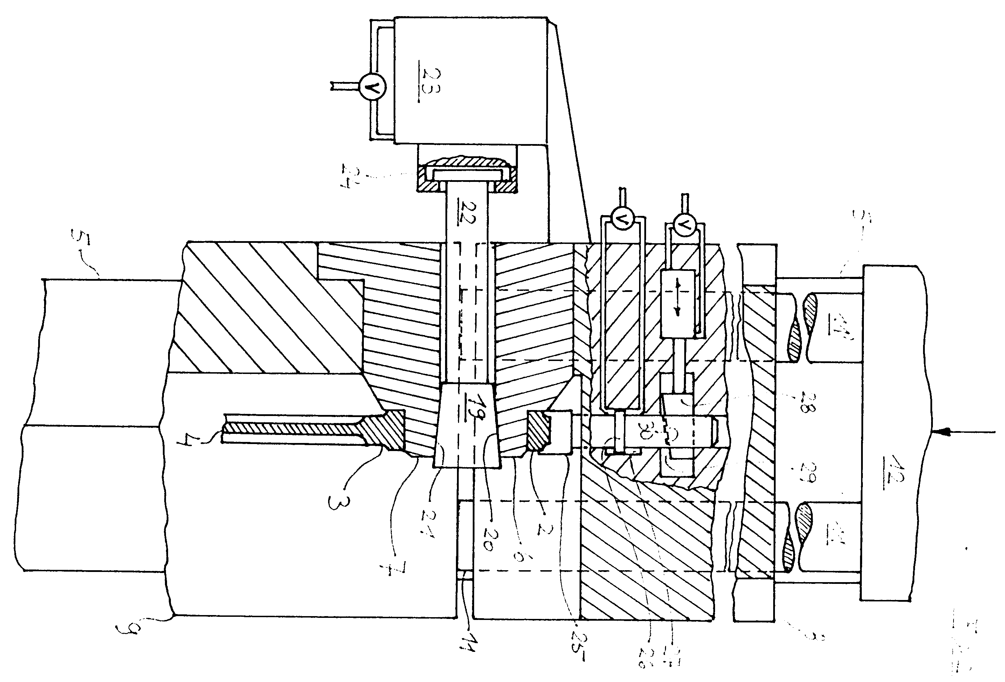

Eine Vorrichtung 1 dient zum Bruchtrennen eines Lagerdeckels 2 vom Lagerring 3 eines Pleuels 4 einer nicht gezeigten Hubkolbenmaschine. Die Vorrichtung 1 umfaßt ein Gestell 5 mit einer vorrichtungsstarren, als Halbdorn 6 gestalteten Bauteil-bzw. Pleuel-Halterung und einer vorrichtungsbeweglichen, als Halbdorn 7 gestalteten Bauteil- bzw. Pleuel-Halterung. Der vorrichtungsstarre Halbdorn 6 ist mit einer Gestell-Traverse 8 und der vorrichtungsbewegliche Halbdorn 7 ist mit einem im Gestell 5 geführten Schlitten 9 fest verbunden. Wie Fig. 2 zeigt, durchsetzen beide Halbdorne 6 und 7 den geschlossenen Lagerring 3 des Pleuels 4, über das der Schlitten 9 an der Gestell-Traverse 8 hängt bzw. relativ zu dieser positioniert ist.

Die Gestell-Traverse 8 dient ferner der Führung eines mechanischen Gestänges 10. Dieses umfaßt zur Längsachse des eingebrachten Pleuels 4 symmetrisch angeordnete Druckstäbe 11 und 11′ an einem biegestarren Steg 12. An diesen greift eine Kolbenstange 13 einer Kolben-Zylinder-Einheit 14 zur Erzeugung einer Zugbruch-Kraft an. Die Kolbenstange 13 steht über einen doppelseitig pneumatisch beaufschlagbaren Vorspann-Kolben 15 mit einem hydraulisch übersetzt beaufschlagbaren Kraft-Kolben 16 in Verbindung. Für die hydraulische Übersetzung dient ein Stempel 17 an einem pneumatisch beaufschlagten Übersetzerkolben 18.

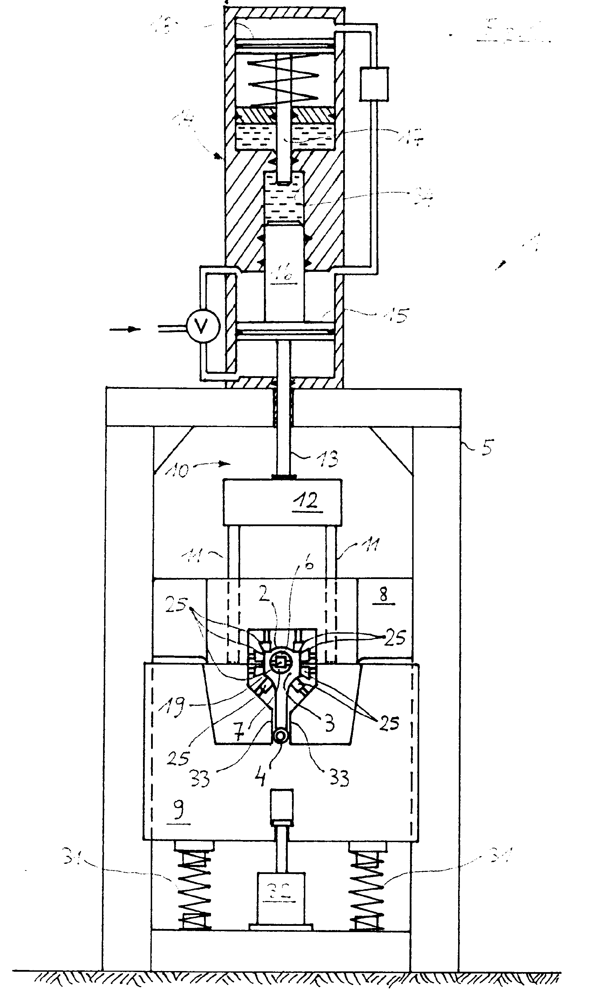

Wie aus Fig. 1 weiter ersichtlich, sind die beiden Halbdorne 6 und 7 im Bereich der Bruchtrennflächen des Lagerringes 3 des Pleuels 4 gegenseitig beabstandet. Aus Fig. 2 ist ein zwischen beiden Halbdornen 6 und 7 angeordneter Keil 19 ersichtlich, der über korrespondierende Keilflächen 20, 21 der gegenseitigen Abstützung der Halbdorne 6 und 7 dient. Um die gegenseitige Abstützung auch während eines Bruchvorganges bei sich voneinander entfernenden Halbdornen 6 und 7 sicherzustellen, ist der Stütz-Keil 19 über eine Betätigungsstange 22 mittels einer Verstelleinrichtung 23 vorgespannt gehalten. Weiter ist der Stütz-Keil 19 mit der Betätigungsstange 22 über ein Gelenk 24 im wesentlichen parallel zum vorrichtungsbeweglichen Halbdorn 7 am Schlitten 9 verlagerbar. Damit ist über den gesamten Bruchvorgang eine gegenseitige, die Biegesteifigkeit erhöhende Abstützung der Halbdorne 6 und 7 erzielt.

Fig. 1 zeigt weiter, daß vor dem Bruchtrennen des Lagerdeckels 2 vom Lagerring 3 des Pleuels 4 der Lagerring 3 am Außenumfang von Spannbacken 25 erfaßt ist. Eine Anzahl der Spannbacken 25 ist an der Gestell-Traverse 8 und die andere Anzahl an Spannbacken 25 ist am Schlitten 9 relativ zum Pleuel 4 bzw. dessen Lagerring 3 beweglich angeordnet und ggf. pendelnd ausgebildet (nicht gezeigt). Wie in Fig. 2 für eine an der Gestell-Traverse 8 angeordnete Spannbacke 25 dargestellt, sind die vor dem Bruchvorgang angelegten Spannbacken 25 während des Bruchvorganges in Zustellrichtung über einen Nachstellkolben 26 in einer Kammer 27 nachführbar. Weiter wirkt jede Spannbacke 25 mit einem kraftgesteuerten Verschiebekeil 28 als Rücklaufsperre zusammen, wobei die Keilflächen 29 und 30 an Verschiebekeil 28 und Spannbacke 25 der Selbsthemmung dienende Neigungen aufweisen.

Weiter ist die Vorrichtung 1 an der Gestell-Traverse 8 mit auf die Bruchtrennflächen des Lagerringes 3 gerichtete Blasdüsen ausgerüstet (nicht gezeigt).

Wie Fig. 1 auch zeigt, ist der den vorrichtungsbeweglichen Halbdorn 7 tragende Schlitten 9 überdimensioniert gestaltet. Diese Gestaltung dient der Ausbildung eines Schlittens 9 von großer Masse, die der Erzielung eines kontinuierlichen dynamischen Bruchvorganges dient. Zum Abbremsen des massigen Schlittens 9 sind Puffer 31 im Gestell 5 vorgesehen. Weiter steht der Schlitten 9 mit einem Hubzylinder 32 in Verbindung, der einerseits zum Aufbringen einer vorbestimmten Vorspannung in den Bruchquerschnitten des Lagerringes 3 dient und andererseits nach dem Bruchvorgang zum Anheben des Schlittens 9 in die Ausgangslage.

Die vorzugsweise dem Bruchtrennen eines Sinterschmiede-Pleuels 4 im großen Lagerring 3 dienende Vorrichtung 1 wird derart gehandhabt, daß zuerst das Pleuel 4 mit seinem zu teilenden Lagerring 3 z. B. mittels eines Handhabungsautomaten (nicht gezeigt) über Anschläge 33 am Schlitten 9 lagegesichert auf den beiden Halbdornen 6 und 7 positioniert wird. Anschließend wird die Verstelleinrichtung 23 aktiviert zur Betätigung des Stütz-Keiles 19, der beide Halbdorne 6 und 7 satt gegen die Innenkontur des Lagerringes 3 zur zusätzlichen reibschlüssigen Fixierung des Pleuels 4 anpreßt. Daraufhin werden an die Außenkontur des Lagerringes 3 sämtliche Spannbacken 25 mit Vorspannung angelegt. Schließlich wird mittels des Hubzylinders 32 über den Schlitten 9 und den vorrichtungsbeweglichen Halbdorn 7 das Pleuel 4 einer in Richtung der anstehenden Zugbruchbelastung wirkenden, vorbestimmten Vorspannung unterworfen. Dieser Vorspann-Vorgang kann ein Nachsetzen des Stütz-Keiles 19 zwischen den Halbdornen 6 und 7 sowie der am Lagerring 3 außen anliegenden Spannbacken 25 bewirken, die entgegengesetzt zur Zustellrichtung selbsttätig blockiert sind.

Als nächste vorbereitetende Handhabung zum einstufigen Bruchtrennen des Pleuel-Lagerringes 3 in einen Lagerdeckel 2 und in einen pleuelschaftseitigen Teil des Lagerringes 3 wird das mechanische Gestänge 10 zur Beseitigung von Elastizitäten und von vorrichtungs- und bauteil-bedingten Leerwegen vorgespannt. Das Verspannen erfolgt durch Beaufschlagen des Vorspann-Kolbens 15, z. B. mittels Druckluft, der über die Kolbenstange 13 auf den biegestarren Steg 12 einwirkt, dessen Druckstäbe 11, 11′ satt auf dem Schlitten 9 als dem Träger des vorrichtungsbeweglichen Halbdornes 7 aufliegen. Damit erhöht sich die am Pleuel 4 wirkende Vorspannkraft, die jedoch relativ zur erforderlichen Zugbruch-Kraft geringgehalten wird, z. B. bis zu 20 %.

Mit erreichter Vorspannposition des Vorspann-Kolbens 15 hat auch der Kraft-Kolben 16 der als Energiespeicher dienenden Kolben-Zylinder-Einheit 14 seine Ausgangsposition erreicht. Ab dieser wird durch Umschalten der Druckluft auf den Übersetzer-Kolben 18 der Stempel 17 in die andernends vom Kraft-Kolben 16 beweglich verschlossene Hydraulikkammer 34 eingefahren zur Bewirkung einer hydraulischen Kraftübersetzung am Kraft-Kolben 16. Dieser leitet die Zugbruch-Kraft unmittelbar über das verspannt angeordnete und damit spiel- und elastizitäts-freie mechanische Gestänge 10 in den Schlitten 9 mit dem vorrichtungsbeweglichen Halbdorn 7 ein.

Aus der Erkenntnis, daß für ein einstufiges Brechen, d. h., daß bei mehreren Bruchquerschnitten der Bruchvorgang gleichzeitig beendet ist, ein sehr steiler Verlauf des Bruchkraft-Anstieges vorteilhaft ist, wird der Schlitten 9 mit einer entsprechenden Zusatzmasse ausgerüstet. Vorzugsweise wird dies durch einen Schlitten 9 von erheblichem Gewicht erreicht. Ein solchermaßen schwer ausgebildeter Schlitten beeinflußt durch seine träge Masse einschließlich der Masse des mechanischen Gestänges 10 nicht nur den Verlauf des Bruchkraft-Anstieges, er ist damit wesentlich auch Ursache für einen kontinuierlichen dynamischen Bruchvorgang. Durch geschickte Abstimmung des Verhältnisses der aus dem Energiespeicher (Kolben-Zylinder-Einheit 14) schlagartig freisetzbaren Zugbruch-Kraft und der mit der vorrichtungsbeweglichen Bauteil-Halterung (Halbdorn 7) verbundenen trägen Masse kann der dynamische Bruchvorgang vorteilhaft werkstoffgerecht für das jeweilige Bauteil (Pleuel 4) gesteuert werden. Weiter bietet die Kombination der vorerwähnten trägen Masse mit einer, wie weiter oben beschrieben, pneumohydraulisch erzeugte Kraft den Vorzug, diese Kraft nach Erreichen ihres Maximalwertes über eine vorbestimmte Zeitspanne im wesentlichen konstant zu halten. Damit ist ein Kraft-Impuls von nadelartigem Verlauf mit dem Nachteil hochfrequenter Schwingungen zwischen den reißenden Trennflächen vermieden.

Für den vorbeschriebenen Ablauf des dynamischen Bruchvorganges ist es zum einen wesentlich, daß die beiden Halbdorne 6 und 7 während des gesamten Bruchvorganges über den selbsttätig nachführbaren Stütz-Keil 19 eine biegesteife Aufnahme bzw. Halterung bilden. Weiter ist zum anderen wesentlich, daß der Lagerring 3 des Sinterschmiede-Pleuels während des gesamten Bruchvorganges durch die selbsttätig nachsetzenden und in Gegenrichtung blockierten Spannbacken 25 an elastischen Verformungen gehindert ist und somit daraus nachteilige Einflüsse auf den Bruchvorgang, insbesondere hinsichtlich der Qualität der Bruchflächen vermieden sind. Bevorzugt wird der Pleuel-Lagerring 3 am Außenumfang von zu den Bruchquerschnitten parallel wirkenden Spannbacken 25 und ferner von dazu quer gerichtet wirkenden Spannbacken 25 gespannt. Die Vermeidung der Bauteil- bzw. Lagerring-Formänderung ist jedoch nicht ohne die ständige gegenseitige Abstützung der Bauteil-Halterungen bzw. der Halbdorne 6 und 7 denkbar.

Nach dem einstufigen Bruchtrennen des Lagerdeckels 2 vom übrigen Pleuel 4 werden die gestellseitigen und die schlittenseitigen Spannbacken 25 in vorbestimmter Folge gelöst zur gemeinsamen Entnahme des Lagerdeckels 2 und des übrigen Pleuels 4 mittels eines nicht gezeigten Handhabungsautomaten.

Das vorbeschriebene Verfahren sowie die zu dessen Durchführung aufgezeigte Vorrichtung ermöglichen bei Verwendung in einer Großserienfertigung eine gleichbleibend hohe Bruchflächenqualität, da mit den vorgeschlagenen Maßnahmen und/oder Verfahrensschritten durch Verschleiß gegebene, größer werdende Toleranzen selbsttätig ausgeglichen werden.

## Patentansprüche

1. Verfahren zum Bruchtrennen eines Bauteiles (4), insbesondere aus Metall,
- bei dem das Bauteil (4) in einer Vorrichtung (1) mit dem vorbestimmten Bruchquerschnitt zwischen einer vorrichtungsstarren und einer vorrichtungsbeweglichen Bauteil-Halterung (6 bzw. 7) lagegesichert angeordnet wird, und
- eine zum Bruchquerschnitt symmetrisch wirkende, aus einem Energiespeicher (14) freisetzbare Kraft über ein Gestänge (10) auf die vorrichtungsbewegliche Bauteil-Halterung (7) übertragen wird,
dadurch gekennzeichnet,
- daß ein mechanisches Gestänge (10) zwischen einem krafteinleitenden Organ (16) des Energiespeichers (14) und der über das zu trennende Bauteil (4) fixierten, vorrichtungsbeweglichen Bauteil-Halterung (7) mit Vorspannung angeordnet wird, und
- daß ferner Gestänge (10) und vorrichtungsbewegliche Bauteil-Halterung (7) zusätzlich mit einer Masse verbunden sind, wobei
- eine vom Niveau der Vorspannung des Gestänges (10) aus im wesentlichen schlagartig aus dem Energiespeicher (14) freisetzbare Kraft zur Einwirkung auf den Bruchquerschnitt des Bauteiles (4) über die aus Zusatzmasse (9), beweglicher Bauteil-Halterung (7) und Gestänge (10) gebildete Gesamtmasse gebracht wird.

2. Verfahren nach Anspruch 1,
dadurch gekennzeichnet, daß die Kraft aus dem Energiespeicher nach Erreichen eines Maximalwertes über eine vorbestimmte Zeit im wesentlichen konstant gehalten wird.

3. Vorrichtung zur Durchführung des Verfahrens nach den Ansprüchen 1 und 2,
mit einer vorrichtungsstarren und einer vorrichtungsbeweglichen Bauteil-Halterung (6 bzw. 7), wobei eine zum Bruchquerschnitt symmetrisch wirkende, aus einem Energiespeicher (14) freisetzbare Kraft über ein Gestänge (10) auf die vorrichtungsbewegliche Bauteil-Halterung (7) übertragen wird,
dadurch gekennzeichnet,
- daß der Energiespeicher eine Kolben-Zylinder-Einheit (14) mit hydraulischer Übersetzung ist, und
- daß als krafteinleitendes Organ des Energiespeichers ein hydraulisch übersetzt beaufschlagter Kraft-Kolben (16) dient, der
- mit einer Kolbenstange (13) des mechanischen Gestänges (10) in Verbindung steht, wobei
- die Kolbenstange (13) einen zum Vorspannen und Lösen des Gestänges (10) doppelseitig beaufschlagbaren Vorspann-Kolben (15) trägt.

4. Vorrichtung nach Anspruch 3,
dadurch gekennzeichnet,
- daß der Vorspann-Kolben (15) und ein der hydraulischen Übersetzung über einen Stempel (17) der Kolben-Zylinder-Einheit (14) dienende Übersetzer-Kolben (18) jeweils pneumatisch beaufschlagt sind, und
- ggf. über die erreichte Vorspannposition des Vorspann-Kolbens (15) ein Signal zur Steuerung des Übersetzer-Kolbens (18) abgeleitet ist.

5. Vorrichtung nach den Ansprüchen 3 bis 4,
dadurch gekennzeichnet,
- daß das mechanische Gestänge (10) einen mit der Kolbenstange (13) verbundenen, biegestarren Steg (12) umfaßt, an dem
- in einer Gestell-Traverse (8) der Vorrichtung (1) geführte Druckstäbe (11,11′) angeordnet sind, die
- über ihre freien Enden mit einem mit Zusatzmasse belegten, die vorrichtungsbewegliche Bauteil-Halterung (Halbdorn 7) tragenden Schlitten (9) in Verbindung stehen.

6. Vorrichtung nach den Ansprüchen 3 bis 5, zum Bruchtrennen eines Bauteiles mit einer Durchbrechung, insbesondere eines Pleuels (4) mit einem Lagerring (3),
dadurch gekennzeichnet,
- daß frei vorstehend gestaltete Bauteil-Halterungen (Halbdorne 6, 7) in die Durchbrechung eingreifen, und
- daß die vorrichtungsstarre Bauteil-Halterung (Halbdorn 6) und die vorrichtungsbewegliche Bauteil-Halterung (Halbdorn 7) zumindest bei Beginn der Bruchtrennung des Bauteiles (Pleuel 4 bzw. Lagerring 3) gegenseitig gestützt angeordnet sind.

7. Vorrichtung nach den Ansprüchen 3 bis 6,
dadurch gekennzeichnet,
- daß die Bauteil-Halterungen (Halbdorne 6, 7) mit einem der gegenseitigen Stützung dienenden Keil (19) korrespondierenden Keilflächen (20,21) ausgebildet sind, und
- daß der Stützkeil (19) über eine Betätigungsstange (22) von einer Verstelleinrichtung (23) vorgespannt angeordnet ist, wobei
- der Stützkeil (19) und die Betätigungsstange (22) über ein Gelenk (24) im wesentlichen parallel mit der vorrichtungsbeweglichen Bauteil-Halterung (Halbdorn 7) verlagerbar angeordnet sind.

8. Vorrichtung nach den Ansprüchen 3 bis 7,
dadurch gekennzeichnet,
- daß an der Außenkontur des Bauteiles, insbesondere eines Pleuel-Lagerrings (3), Spannbacken (25) formschlüssig unter Vorspannung anliegen und
- daß relativ zu einer Basis (Gestell-Traverse 8) der vorrichtungsstarren Bauteil-Halterung (Halbdorn 6) und relativ zum Schlitten (9) der vorrichtungsbeweglichen Bauteil-Halterung (Halbdorn 7) jeweils bewegliche Spannbacken (25) vorgesehen sind, die
- jeweils während des Bruchvorganges in Zustellrichtung nachführbar und über eine Rücklaufsperre positionsgesichert angeordnet sind.

9. Vorrichtung nach den Ansprüchen 3 bis 8,
dadurch gekennzeichnet,
- daß jede Spannbacke (25) mit einem kraftgesteuerten Verschiebekeil (28) als Rücklaufsperre zusammenwirkt, wobei
- an Verschiebekeil (28) und Spannbacke (25) vorgesehene Keilflächen (29,30) der Selbsthemmung dienende Neigungen aufweisen.

10. Vorrichtung nach den Ansprüchen 3 bis 9,
gekennzeichnet durch die Anordnung von auf die Bruchtrennflächen des Bauteiles (Lagerring 3) gerichteten Blasdüsen.

11. Verfahren nach den Ansprüchen 1 und 2 zur Herstellung eines Pleuels, insbesondere Sinterschmiede-Pleuels, mit der Vorrichtung nach den Ansprüchen 3 bis 10,
dadurch gekennzeichnet,
- daß das Pleuel (4) mit einem zu teilenden Lagerring (3) lagegesichert auf den beiden Bauteil-Halterungen (Halbdornen 6,7) angeordnet und durch Betätigen des Stütz-Keiles (19) zwischen den Halbdornen (6,7) fixiert wird,
- daß anschließend der Lagerring (3) des Pleuels (4) über die Spannbacken (25) im wesentlichen in Richtung der Halbdorne beaufschlagt (6,7) wird, und
- ferner das Pleuel (4) über einen am Schlitten (9) des vorrichtungsbeweglichen Halbdornes (7) angreifende Zugeinrichtung (32) in Richtung der Zugbruchbelastung vorgespannt wird, und
- daß weiter das mechanische Gestänge (10) zwischen dem Kraft-Kolben (16) der als Energiespeicher dienenden pneumatischen/hydraulischen Kolben-Zylinder-Einheit (14) und dem mit Zusatzmasse versehenen Schlitten (9) des vorrichtungsbeweglichen Halbdornes (7) spielfrei vorgespannt, und
- schließlich aus dem Energiespeicher (14) eine ein einstufiges Brechen des Pleuel-Lagerringes (3) bewirkende Kraft im wesentlichen schlagartig freigesetzt wird, wobei
- die Zugbruch-Kraft in ihrem Maximalwert über eine vorbestimmte Zeitspanne im wesentlichen konstant gehalten wird.

12. Verfahren nach Anspruch 11,
dadurch gekennzeichnet, daß der Pleuel-Lagerring (3) am Außenumfang von zu den Bruchquerschnitten parallel wirkenden Spannbacken (25) und ferner von dazu quer gerichtet wirkenden Spannbacken (25) gespannt wird.

## Claims

1. A method for the fracture-separation of a component (4), especially a metallic component,
- in which the component (4) is arranged with positional stability in an apparatus (1) with the predefined fracture cross-section between a component mount (6) which is fixed and a component mount which is movable (7), and
- in which a force releasable from an energy store (14), and acting symmetrically with respect to the fracture cross-section, is transferred to the movable component mount (7) via a linkage (10),
characterised in that
- a mechanical linkage (10) is arranged with pre-tension between a force-introducing member (16) of the energy store (14) and the movable component mount (7) fixed above the component (4) to be separated, and
- that further the linkage (10) and movable component mount (7) are additionally connected to a mass, whereby
- a force released primarily very suddenly from the energy store (14) from the level of pre-tension of the linkage (10) to act on the fracture cross-section of the component (4) is applied via the entire mass comprised of additional mass (9), movable component mount (7) and linkage (10).

2. A method according to claim 1,
characterised in that the force from the energy store is maintained at a predominantly constant level for a predefined period of time once a maximum value has been reached.

3. Apparatus for carrying out the method according to claims 1 and 2 with a fixed component mount and a movable component mount (6 and 7), wherein a force releasable from an energy store (14) acting symmetrically to the fracture cross-section is transferred to the movable component mount (7) via a linkage (10),
characterised in that
- the energy store is a piston-cylinder unit (14) with hydraulic intensification, and
- that an hydraulically-intensified impinged power piston (16) serves as the force-introducing member of the energy store, with the said power piston (16)
- connected to a piston rod (13) of the mechanical linkage (10), and
- the piston rod (13) bears a pre-tension piston (15) which may be actuated on both sides for the pre-tensioning and releasing of the linkage (10).

4. Apparatus according to claim 3,
characterised in that
- the pre-tension piston (15) and an intensifying-piston (18) which facilitates hydraulic intensification via a plunger (17) of the piston-cylinder unit (14) are in each case pneumatically actuated, and
- a signal to control the intensifying-piston (18) is derived if necessary via the pre-tension position attained by the pre-tension piston (15).

5. Apparatus according to claims 3 and 4,
characterised in that
- the mechanical linkage (10) comprises a rigid web (12) connected to the piston rod (13), on which
- guided compression rods (11, 11′) are arranged in a frame cross-piece (8) of the apparatus (1), the said compression rods (11, 11′) being connected via their free ends to a carriage (9) bearing the movable component mounts and provided with an additional mass.

6. Apparatus according to any one of claims 3 to 5 for the fracture-separation of a component by break-through, especially of a connecting rod (4) with a bearing ring (3), characterised in that
- free protruding component mounts (half-mandrels 6 and 7) engage in the break-through, and
- that the fixed component mount (half-mandrel 6) and the movable component mount (half-mandrel 7) are arranged so as to provide reciprocal support at least at the start of the fracture-separation of the component (connecting rod 4/bearing ring 3).

7. Apparatus according to any one of claims 3 to 6,
characterised in that
- the component mounts (half-mandrels 6 and 7) interface with a wedge (19) to provide reciprocal support as corresponding wedge surfaces (20, 21), and
- that the supporting wedge (19) is pre-tensioned by an adjusting device (23) via an actuating rod (22), and
- the supporting wedge (19) and the actuating rod (22) are arranged so that they can be moved substantially parallel to the movable component mount (half-mandrel 7) via a link or connection (24).

8. Apparatus according to any one of claims 3 to 7,
characterised in that
- clamping jaws (25) lie against the outer surface of the component, especially a connecting rod/bearing ring (3), in a form-fit manner under prestress, and that
- clamping jaws (25) are provided which are movable relatively to both a base (frame cross-piece 8) of the fixed component mount (half-mandrel 6) and to the carriage (9) of the movable component mount (half-mandrel 7),
- the said clamping jaws (25) being movable in the direction of feed during the fracture process and being arranged, via a back stop, to be positionally stable.

9. Apparatus according to any one of claims 3 to 8,
characterised in that
- each clamping jaw (25) works in conjunction with a power-controlled movable wedge (28) as a back stop, and
- wedge surfaces (29, 30) on the movable wedge (28) and clamping jaw (25) are provided with inclinations to bring about self-locking.

10. Apparatus according to any one of claims 3 to 9,
characterised by the arrangement of blast nozzles aligned to face the fracture-separated surfaces of the component (bearing ring 3).

11. A method according to claims 1 and 2 for the manufacture of a connecting rod, especially a sinter-forged connecting rod, using the apparatus according to claims 3 to 10,
characterised in that
- the connecting rod (4) with a bearing ring (3) to be split is arranged with positional stability on both component mounts (half-mandrels 6 and 7) and is fixed between the half-mandrels 6 and 7 through actuation of the supporting wedge (19),
- the bearing ring (3) of the connecting rod (4) is subsequently clamped by the clamping jaws (25) substantially in the direction of the half-mandrels (6 and 7), and
- further that the connecting rod (4) is prestressed in the direction of the tensile fracture load via a tensioning device (32) engaging with the carriage (9) of the movable half-mandrel (7), and
- that further the mechanical linkage (10) between the power-piston (16) of the pneumatic/hydraulic piston-cylinder unit (14) serving as an energy store and the carriage (9) of the movable half-mandrel (7) provided with additional mass is pre-tensioned without play, and
- finally that a force effecting single-step fracturing of the connecting rod bearing ring (3) is released substantially very suddenly, and
- the tensile fracture force is held, substantially constantly, at its maximum value over a predefined period of time.

12. A method according to claim 11,
characterised in that the connecting rod bearing ring (3) is clamped at its outer circumference by clamping jaws (25) acting parallel to the fracture cross-sections and furthermore by clamping jaws (25) acting transversely thereto.

## Revendications

1. Procédé pour casser un élément de construction (4), en particulier en métal dans lequel :
- l'élément de construction (4) est placé dans un dispositif (1) avec la section transversale de rupture prédéterminée, et bloqué en position entre un support d'élément de construction rigide et un support d'élément de construction mobile (6, 7),
- une force agissant de façon symétrique par rapport à la section transversale de rupture, et libérable à partir d'un accumulateur d'énergie (14) est transmise au moyen de la timonerie (10) au support (7) de l'élément de construction mobile du dispositif, procédé caractérisé en ce que :
- l'on dispose avec précontrainte une timonerie mécanique (10) entre un organe (16) de l'accumulateur d'énergie (14) qui introduit la force et le support de l'élément de construction mobile (7) fixé sur l'élément de construction à séparer (4),
- en outre la timonerie (10) et le support mobile (7) de l'élément de construction sont reliés en plus à une masse,
- une force pouvant être libérée brusquement à partir de l'accumulateur d'énergie (14) par le niveau de précontrainte de la timonerie (10) est amenée à agir sur la section transversale de rupture de l'élément de construction (4) au moyen de la masse totale formée d'une masse additionnelle (9), du support mobile de l'élément de construction (7) et de la timonerie (10).

2. Procédé selon la revendication 1, caractérisé en ce que la force produite à partir de l'accumulateur d'énergie est maintenue, après avoir atteint une valeur maximale, sensiblement constante pendant un intervalle de temps prédéterminé.

3. Dispositif pour la mise en oeuvre du procédé selon les revendications 1 et 2 avec un support rigide et un support mobile d'élément de construction (6 ou 7) dans lequel une force agissant symétriquement par rapport à la section transversale de rupture, et pouvant être libérée à partir d'un accumulateur d'énergie (14), est transmise au moyen d'une timonerie (10) au support mobile d'élément de construction, dispositif caractérisé en ce que :
- l'accumulateur d'énergie est un ensemble piston-cylindre (14) avec une démultiplication hydraulique et,
- on utilise comme organe introduisant la force de l'accumulateur d'énergie un piston moteur (16) actionné hydrauliquement avec démultiplication, piston qui est en liaison avec une tige de piston (13) de la timonerie mécanique (10),
- la tige de piston (13) portant un piston de précontrainte (15) peut être actionnée des deux côtés pour serrer et relâcher la timonerie (10).

4. Dispositif selon la revendication 3, caractérisé en ce que le piston de précontrainte (18) servant à la démultiplication hydraulique au moyen d'un poinçon (17) de l'ensemble piston-cylindre (14) est sollicité pneumatiquement, le cas échéant un signal pour piloter le piston de démultiplication (18) étant dérivé au moyen de la position de précontrainte du piston (15) obtenue.

5. Dispositif selon les revendications 3 ou 4, caractérisé en ce que :
- la timonerie mécanique (10) comprend une entretoise (12) résistant à la flexion et reliée à la tige de piston (13), sur laquelle :
- on dispose des montants travaillant à la compression (11, 11′) guidés dans une traverse de bâti (8) du dispositif (1), montants qui :
- par leurs extrémités libres sont en liaison avec un chariot (9) qui porte le support d'élément de construction (demi-mandrin 7) mobile du dispositif et qui est garni d'une masse additionnelle.

6. Dispositif selon les revendications 3 à 5 pour séparer un élément de construction par une cassure, en particulier une bielle (4) munie d'une bague de coussinet (3) caractérisé en ce que :
- des supports de l'élément de construction formés de façon à faire saillie librement (demi-mandrins 6, 7) viennent en prise dans la cassure et
- le support rigide de l'élément de construction (demi-mandrin 6) et le support mobile de l'élément de construction (demi-mandrin 7) sont disposés au moins au début de la cassure de l'élément de construction (bielle 4 ou bague de coussinet 3) de façon à s'appuyer mutuellement l'un sur l'autre.

7. Dispositif selon les revendications 3 à 6, caractérisé en ce que :
- les supports de l'élément de construction (demi-mandrins 6, 7) sont constitués avec des faces (20, 21) correspondant à un coin (19) servant à l'appui mutuel et,
- le coin (19) est disposé de façon à être précontraint au moyen d'une tige d'actionnement (22) par un dispositif de réglage (23),
- le coin d'appui (19) et la tige d'actionnement (22) sont disposés au moyen d'une articulation (24) de façon à pouvoir se déplacer sensiblement parallèlement au support mobile de l'élément de construction (demi-mandrin 7).

8. Dispositif selon les revendications 3 à 7, caractérisé en ce que :
- sur le contour extérieur de l'élément de construction, en particulier d'une bague de coussinet de bielle (3) reposent des mâchoires de serrage (25) fonctionnant par engagement positif sous précontrainte et,
- des mâchoires de serrage respectivement mobiles (25) sont prévues par rapport à une base (traverse de bâti 8) du support rigide de l'élément de construction (demi-mandrin 6) et par rapport au chariot (9) du support de l'élément de construction mobile (demi-mandrin 7), mâchoires qui :
- sont respectivement disposées pendant le processus de rupture de façon à suivre le sens du réglage et sont bloquées en position au moyen d'une butée de retour.

9. Dispositif selon les revendications 3 à 8, caractérisé en ce que :
- chaque mâchoire de serrage (25) coopère avec un coin de poussée (28) commandé par une force et servant de butée de retour ;
- des faces (29, 30) prévues sur le coin de poussée (28) et la mâchoire de serrage (25) présentent des pentes servant au blocage automatique.

10. Dispositif selon les revendications 3 à 9, caractérisé par la disposition de buses de soufflage orientées sur les surfaces de rupture de l'élément de construction (bague de coussinet 3).

11. Procédé selon les revendications 1 et 2 pour la fabrication d'une bielle, en particulier d'une bielle obtenue par frittage-forgeage, par ² le dispositif selon les revendications 3 à 10, caractérisé en ce que :
- la bielle est montée et bloquée en position, avec une bague de coussinet (3) à partager, sur les deux supports d'élément de construction (demi-mandrins 6, 7) et est fixée entre les demi-mandrins (6, 7) en actionnant le coin servant d'appui (19),
- ensuite la bague de coussinet (3) de la bielle (4) est sollicitée au moyen des mâchoires de serrage (25) essentiellement en direction des demi-mandrins (6, 7) et :
- en outre la bielle (4) est précontrainte au moyen d'un dispositif de traction (32) venant en prise sur le chariot (9) du demi-mandrin mobile du dispositif (7) dans le sens de la rupture par étirement et,
- de plus la timonerie mécanique (10) est précontrainte sans jeu entre le piston moteur (16) de l'ensemble piston-cylindre (14) pneumatique-hydraulique servant d'accumulateur d'énergie et le chariot (19), pourvu d'une masse additionnelle, du demi-mandrin mobile du dispositif (7) et,
- finalement on libère à partir de l'accumulateur d'énergie (14) une force qui provoque une rupture en une seule étape de la bague de coussinet de bielle (3) ;
- la force de rupture par étirement étant maintenue sensiblement constante à sa valeur maximale durant un intervalle de temps prédéterminé.

12. Procédé selon la revendication 11, caractérisé en ce que la bague de coussinet de bielle (3) est serrée sur son pourtour extérieur par les mâchoires de serrage (25) agissant parallèlement aux sections transversales de rupture et en outre par les mâchoires de serrage (25) agissant perpendiculairement à cela.
